# EUROPÄISCHE PATENTSCHRIFT

(11) **EP 1 972 477 B1**
(45) Veröffentlichungstag und Bekanntmachung des Hinweises auf die Patenterteilung: **25.12.2013**
(21) Anmeldenummer: 08003884.7
(22) Anmeldetag: 03.03.2008
(51) Int. Cl.: B60J 1/20

(54) **Seitenfensterrollo mit anscharniertem Zugstab und rechteckigem Tragstab**
Side window blind with hinged pull bar and rectangular support rod
Store de fenêtre latérale doté d'une barre de traction à charnière et d'une barre de support carrée

(30) Priorität: 21.03.2007 DE 102007014099; 02.04.2007 DE 102007016154
(43) Veröffentlichungstag der Anmeldung: 24.09.2008
(73) Patentinhaber: BOS GmbH & Co. KG, 73760 Ostfildern (DE)
(72) Erfinder: Hansen, Melf, 75053 Gondelsheim (DE)
(74) Vertreter: Rüger, Barthelt & Abel

(56) Entgegenhaltungen:
- EP-A2- 1 123 824
- DE-A1- 19 806 736
- DE-A1- 19 826 537
- DE-U1-202004 014 652
- DE-U1-202006 011 248
- US-A1- 2006 260 771

## Beschreibung

Bei Seitenfensterrollos von Kraftfahrzeugen geht zur Zeit der Trend dahin, die Führungseinrichtungen zum Führen der Rollobahn möglichst zu verbergen. Damit müssen die bislang verwendeten Führungsschienen, die seitlich des rechteckigen Teils des Fensters verlaufen, durch Führungs- oder Tragstäbe ersetzt werden. Dazu ist aus der DE 20 2004 014 652 U1 und aus der DE 20 2006 011 248 U1 ein entsprechendes Seitenfensterrollo bekann. Bei ausgefahrenem Rollo tragen hier die Tragstäbe, wie ihr Name bereits sagt, den Zugstab, der an der freien Kante der Rollobahn angebracht ist. Sie übernehmen damit zwei Funktionen, nämlich den Zugstab so zu führen, dass er an der Scheibe bleibt und andererseits erzeugen sie die notwendige Schubkraft, um die Rollobahn von der Wickelwelle abzuwickeln und gespannt zu halten.

Der Zugstab, der an dem freien oberen Ende des oder der Tragstäbe befestigt ist, soll dabei die von den Tragstäben ausgeübte Kraft gleichmäßig auf die Rollobahn verteilen, damit sie in allen Bereichen faltenfrei straff gehalten ist. Insbesondere wird es als unschön empfunden, wenn in der Rollobahn irgendwelche Schrägfalten auftreten. Diese können entstehen, wenn der Winkel, der die Verbindung zwischen Tragstab und Zugstab aufweist, versetzt ist gegenüber dem Winkel, den die Rollobahn aufgrund ihrer Gestalt beim Abwickeln von der Wickelwelle einnehmen will.

Problematisch bei den bekannten Lösungen sind auch konische Wickelwellen. Diese sind bislang nur in Verbindung mit manuell zu betätigenden Rollos einzusetzen.

Ausgehend hiervon ist es Aufgabe der Erfindung, ein neues Seitenfensterrollo für Kraftfahrzeuge zu schaffen, bei dem nicht die Gefahr von Schrägfalten besteht und das auch in Verbindung mit konischen Wickelwellen verwendet werden kann.

Diese Aufgabe wird erfindungsgemäß mit einem Seitenfensterrollo mit den Merkmalen des Anspruches 1 gelöst.

Das neue Seitenfensterrollo für Kraftfahrzeuge weist eine unterhalb der Fensterunterkante drehbar gelagerte Wickelwelle auf. An der Winkelwelle ist mit einer Kante eine Rollobahn befestigt, die einen dem Seitenfenster entsprechenden Zuschnitt aufweist. An der anderen Kante, die von der Wickelwelle abliegt, ist der Zugstab befestigt. Innerhalb des Türkorpus ist wenigstens ein Tragstab längsverschieblich gelagert, der über die Fensterunterkante aus dem Korpus ausgefahren werden kann. Der Tragstab ist mit dem Zugstab über ein Gelenk verbunden. Der Zugstab kann sich gegenüber dem Tragstab entsprechend den Spannungsverhältnissen in der Rollobahn frei einstellen.

Mit Hilfe einer Führungseinrichtung, die unterhalb der Fensterunterkante angeordnet ist, wird der Tragstab im vorgegebenen Winkel, z.B. angenähert rechtwinklig, zu der Fensterunterkante vertikal geführt.

Eine Antriebseinrichtung dient dazu, zumindest die Wickelwelle im Sinne eines Aufwickelns der Rollobahn auf die Wickelwelle zu betätigen.

Mit Hilfe der neuen Anordnung ist es insbesondere möglich auch Seitenfensterrollos in Verbindung mit konischen Wickelwellen zu verwenden. Konische Wickelwellen werden vorwiegend dann benötigt, wenn die Fensteroberkante nicht parallel zu der Fensterunterkante verläuft und der Zugstab im eingefahrenen Zustand dennoch möglichst parallel zur Fensterunterkante verlaufen soll, um so möglichst wenig in Erscheinung zu treten. Bei derartigen Seitenfensterrollokonfigurationen führt folglich der Zugstab beim Ausfahren des Rollos eine Schwenkbewegung aus. Durch die Verwendung von Gelenken zwischen den Tragstäben und dem Zugstab können diese Schwenkbewegungen ohne weiteres aufgenommen werden, ohne dass größere Spannungen entstehen.

Bei der Verwendung von zwei Tragstäben können diese je nach Anforderung unterschiedliche effektive Längen aufweisen.

Die Führungseinrichtung innerhalb des Türkorpus kann sich über die volle Auszugslänge oder lediglich einen Teil, d.h. den oberen Bereich erstrecken. Dabei hat die Erstreckung der Führungseinrichtung über den vollen Hub den Vorteil, dass jegliche Möglichkeit des seitlichen Ausknickens bei Druckbelastung innerhalb der Tür ausgeschlossen ist. Außerdem ermöglicht eine solche Führungseinrichtung ein leichteres Anlenken von Zug- oder Druckmitteln, die dazu eingerichtet sind, den Tragstab zu bewegen, da von diesen Zug- oder Druckmitteln naturgemäß auch immer eine Seitenkraft ausgeht, zufolge der unsymmetrischen Krafteinleitung.

Bei Verwendung von lediglich einem einzigen Tragstab ist es von Vorteil, wenn dieser eine von der Kreisform abweichende Gestalt hat, beispielsweise eine rechteckige Querschnittsgestalt. Ein so gestalteter Tragstab ist in der Lage, Torsionsmomente in die Führungseinrichtung einzuleiten, was umgekehrt bedeutet, dass sich der Zugstab zusammen mit dem Tragstab nicht um dessen Längsachse drehen oder pendeln kann.

Für den Antrieb des neuen Seitenfensterrollos kommen eine Vielzahl von bekannten Lösungen in Frage. Hierzu gehört im einfachsten Falle die manuelle Betätigung, wobei die Wickelwelle durch einen Federmotor im Sinne des Aufwickelns der Rollobahn beaufschlagt ist. Elektrische Systeme sind ebenfalls denkbar, wobei wahlweise entweder die Wickelwelle oder der bzw. die Tragstäbe durch den Elektromotor bewegt werden, während das jeweils andere Bauteil mit einem Federmotor gekoppelt ist, der dafür sorgt, dass in jeder Betriebsstellung die Rollobahn unter Spannung bleibt.

Im Übrigen sind Weiterbildungen der Erfindung Gegenstand von Unteransprüchen.

Die nachfolgende Figurenbeschreibung erläutert Aspekte zum Verständnis der Erfindung. Weitere nicht beschriebene Details kann der Fachmann in der gewohnten Weise den Zeichnungen entnehmen, die insoweit die Figurenbeschreibung ergänzen. Es ist klar, dass eine Reihe von Abwandlungen möglich sind.

Die nachfolgenden Zeichnungen sind nicht unbedingt maßstäblich. Zur Veranschaulichung von Details können möglicherweise bestimmte Bereiche übertrieben groß dargestellt sein. Darüber hinaus sind die Zeichnungen plakativ vereinfacht und enthalten nicht jedes bei der praktischen Ausführung gegebenenfalls vorhandene Detail. Die Begriffe "oben" und "unten" bzw. "vorne" und "hinten" beziehen sich auf die normale Einlage bzw. die Terminologie bei Kraftfahrzeugen.

In der Zeichnung sind Ausführungsbeispiele des Gegenstandes der Erfindung dargestellt.
- Fig. 1: zeigt den aufgebrochenen Heckbereich eines PKWs.
- Fig. 2: zeigt in einer stark schematisierten Darstellung die hintere rechte Seitentür mit aufgebrochener Innenverkleidung.
- Fig. 3: zeigt in einer perspektivischen Explosionsdarstellung und im Ausschnitt die Verbindung zwischen dem Tragstab und dem Zugstab des Rollos nach Fig. 2.
- Fig. 4: zeigt in einer perspektivischen Ausschnittsdarstellung den Federmotor des Seitenfensterrollos nach Fig. 2.
- Fig. 5: zeigt in einer schematisierten Darstellung einen Seitenfensterrollo im ausgefahrenen Zustand, mit einer konischen Wickelwelle und zwei Tragstäben.

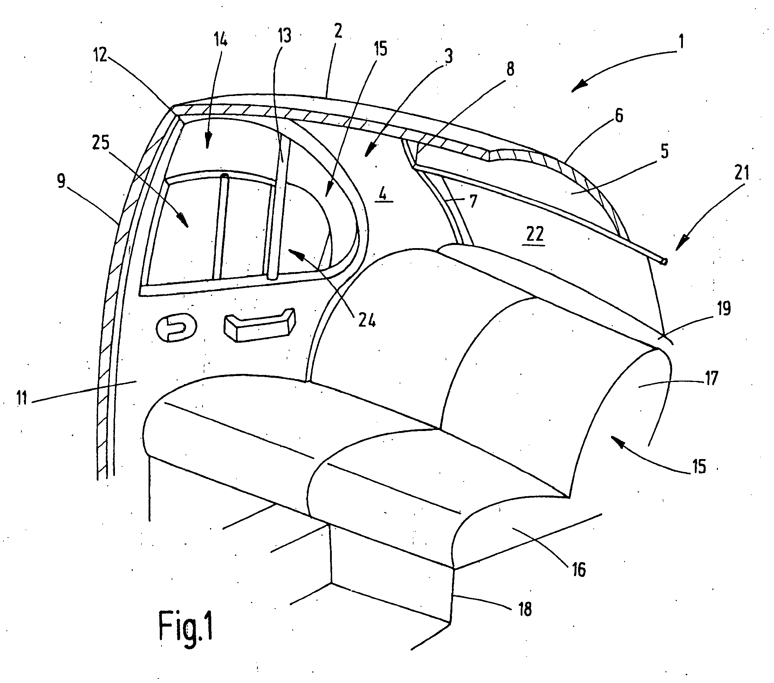

Fig. 1 stellt den aufgebrochenen abgeschnittenen Fondbereich eines PKW dar. Die Figur veranschaulicht einen Blick auf die rechte Innenseite, die zu der weggebrochenen linken Innenseite spiegelbildlich ist. Soweit nichts anderes angegeben, gelten die Erläuterungen zur rechten Karosserieseite sinngemäß auch für die linke Karosserieseite. Die Darstellung ist vereinfacht, so sind beispielsweise Karosserieinnenstrukturen, wie Versteifungen und Befestigungsmittel nicht gezeigt, da die Darstellung für das Verständnis der Erfindung nicht erforderlich ist.

Der veranschaulichte Karosserieabschnitt 1 weist ein Dach 2 auf, von dem seitlich eine C-Säule 3 nach unten zu einer nicht gezeigten Bodengruppe führt. Eine entsprechende C-Säule wäre auf der weggebrochenen Seite des Fahrzeugs zu denken. Die C-Säule 3 ist auf der Innenseite mit einer Verkleidung 4 versehen.

Das Dach 2 geht an seiner Hinterkante in ein Heckfenster 5 über, das an der Oberseite von einer Fensteroberkante 6 begrenzt ist. Von den Seitenkanten, die zueinander spiegelbildlich verlaufen, ist lediglich ein Abschnitt 7 zu erkennen, der an einem Eckbereich 8 in die Fensteroberkante 6 übergeht.

Die Breite des Heckfensters 5 ist auf der Höhe der Gürtellinie der Karosserie größer als im Bereich der Fensteroberkante 6. Im Abstand vor der C-Säule 3 befindet sich eine B-Säule 9, an die in bekannter Weise eine hintere rechte Seitentür 11 anscharniert ist. Die rechte hintere Seitentür 11 enthält einen Fensterausschnitt 12, der durch eine vertikale Strebe 13 in einen im Wesentlichen viereckigen Abschnitt 14 und einen etwa dreieckigen Abschnitt 15 aufgeteilt ist.

Zu dem Innenraum gehört ferner eine Rücksitzbank 15 mit einer Rücksitzfläche 16 und einer Rücksitzlehne 17. Die Rücksitzfläche 17 liegt auf einer Bodengruppe 18 auf.

Zwischen der hinteren Oberkante der Rücksitzlehne 17 und dem Heckfenster 5 erstreckt sich eine Hutablage 19.

Das Heckfenster 5 ist mit einem Heckfensterrollo 21 versehen, von dem lediglich in Fig. 1 eine Rollobahn 22 zu erkennen ist. Weitere Rollos befinden sich bei dem Seitenfenster 12, und zwar in dem viereckigen Fensterabschnitt 14 eine Rollobahn 22 und in dem dreieckigen Abschnitt 15 eine Rollbahn 24.

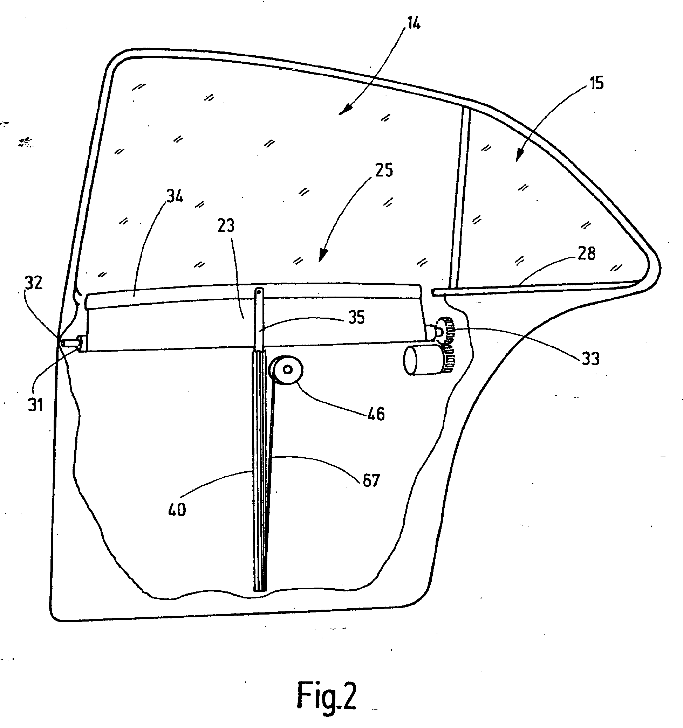

Die Seitentür aus Fig. 1 ist in Fig. 2 vergrößert veranschaulicht. Die Innenverkleidung ist aufgebrochen, um den Aufbau des Seitenfensterrollos 25 erkennen zu können.

Wie ersichtlich, wird die Unterseite des Fensterausschnittes durch eine Fensterunterkante 28 begrenzt, die einen nicht erkennbaren Schlitz enthält, durch den das Fensterrollo 25 aus dem Korpus der Seitentür 11 ausfahrbar ist. Zu dem Fensterrollo 25 gehört eine Rollobahn 29, die mit einer Kante an einer Wickelwelle 31 befestigt ist. Die Wickelwelle 31 ist unterhalb der Fensterunterkante 28 in dem Korpus der Tür mit Hilfe von Lagerzapfen 32 und 33 drehbar gelagert. Die Lagerböcke zum Lagern sind aus Übersichtlichkeitsgründen nicht gezeigt.

Die Rollobahn 29 besteht aus einem im Wesentlichen undehnbaren Material, das geeignet ist, hinreichende Abschattungswirkung zu erzeugen. Der Zuschnitt der Rollobahn 29 entspricht ungefähr der Größe des Fensterausschnittes 14. An der freien Kante ist die Rollobahn 29 mit einem Zugstab 34 versehen.

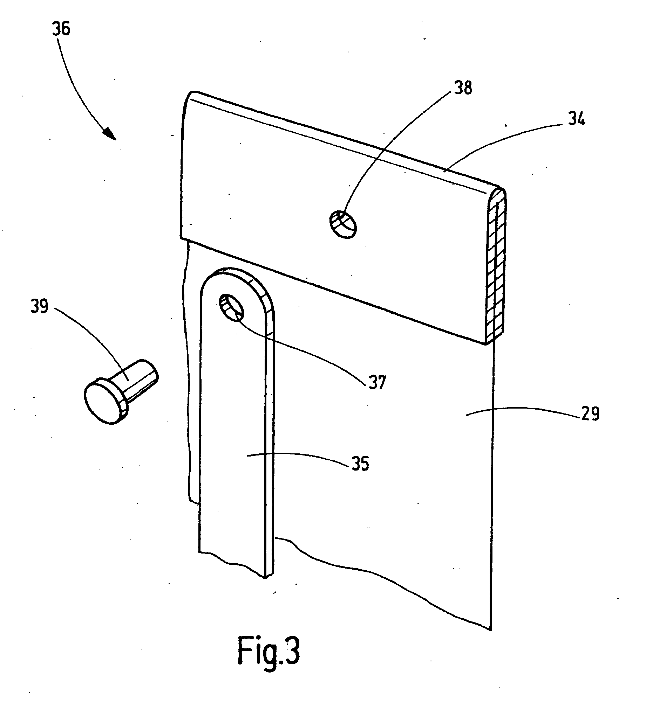

Als Führungseinrichtung für den Zugstab 34 zwischen der eingefahrenen Stellung, wie sie in Fig. 2 gezeigt, und der ausgefahrenen Stellung ist ein Tragstab 35 vorgesehen. Der Tragstab 35 ist eine im Querschnitt rechteckige gerade Stange, die in der Lage ist, hinreichend ausknicksicher den Zugstab 34 zu tragen und zu bewegen. Die große Fläche des tragstabs 35 ist parallel zu der Fläche des Fensters ausgerichtet. Das obere Ende des Tragstabs 35 ist zug- und druckfest über ein Scharniergelenk 36 mit dem Zugstab 24 verbunden, wie Fig. 3 zeigt. Zu dem Scharniergelenk 36 gehören eine in dem Tragstab 35 enthaltene Bohrung 37, die mit einer Bohrung 38 in dem Zugstab 34 fluchtet. Durch beide Bohrungen führt ein Bolzen 39, z.B. in Form eines Niets, der die beiden Teile miteinander drehbar verbindet. Es entsteht so ein Scharniergelenk, dessen Scharnierachse auf der Ebene senkrecht steht, die durch die aufgespannte Rollobahn 29 definiert ist. Der Zugstab 34 kann um die Scharnierachse pendeln und sich frei einstellen, derart dass die links und rechts von dem Scharnier 36 in der Rollobahn 29 wirkenden Kräfte gleich sind. Hierdurch wird ein einseitiger Zug in der Rollobahn 29 mit der Folge von Schrägfalten vermieden.

Der Tragstab 35 läuft in einer Führungsschiene 40, die in dem Türkorpus gehaltert ist und über die Fensterunterkante 28 nach oben nicht überstehen. Mit Hilfe der Führungsschiene 40 wird der Tragstab 35 etwa rechtwinklig zu der Fensterunterkante 28 gleitend geführt. Die Länge des Tragstabs 35 ergibt sich aus der nachstehenden Funktionsbeschreibung. Innerhalb des Türkorpus muss die Führungsschiene 40 nicht notwendigerweise über die gesamte Länge gerade verlaufen; sie kann beispielsweise um eine zu der Fahrzeugachse parallele Achse gekrümmt sein um dem Verlauf der Tür zu folgen.

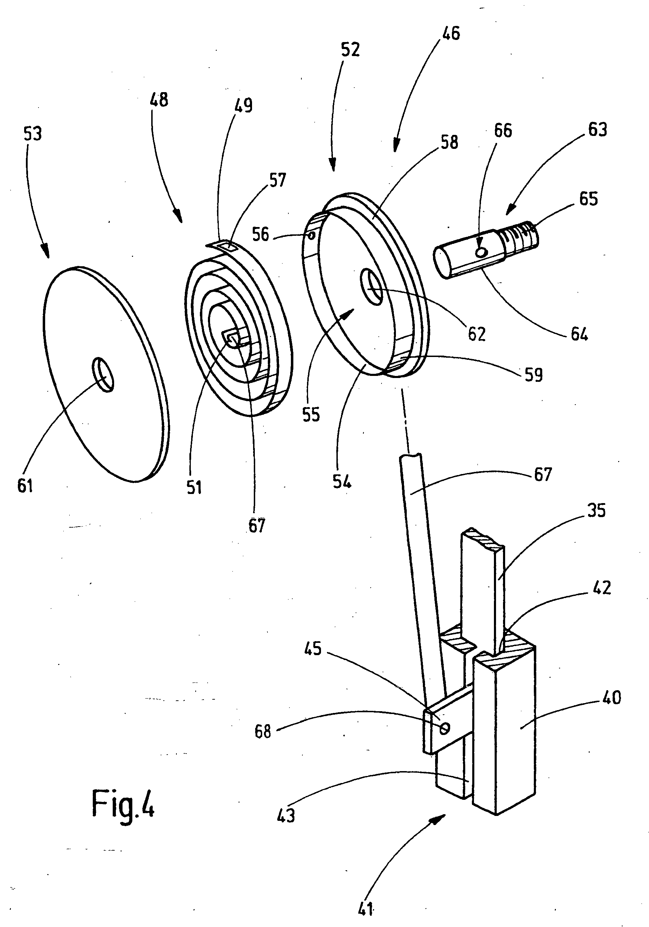

Wie unter Hinzunahme von Fig. 4 zu sehen ist, enthält die Führungsschiene 40 eine Führungsnut 41, die hinterschnitten ausgeführt ist. Das Nutenprofil setzt sich aus einer rechteckigen Nutenkammer 42 und einem rechteckigen Nutenschlitz 43 zusammen, dessen Weite kleiner ist als der Durchmesser der Nutenkammer 42. Hierdurch entsteht eine hinterschnittene Struktur.

Der Durchmesser der Nutenkammer 42 entspricht dem Querschnitt des darin geführten Tragstabs 35.

Wie Fig. 4 ferner erkennen lässt, ist mit dem unteren Ende des Tragstabs 35 eine Lasche 45 verbunden, die durch den Schlitz 43 nach außen vorsteht.

Der Tragstab 35 ist durch einen eigenen Federmotor 46 in die ausgefahrene Stellung vorgespannt. Der Federmotor 46 sitzen knapp unterhalb der Fensterunterkante 28. In der Darstellung nach Fig. 2 ist er unterhalb der Wickelwelle 31 dargestellt. Der Hub ergibt sich aus der weiter unten gegebenen Funktionserläuterungen.

Den inneren Aufbau der beiden Federmotoren 46, 47 zeigt die Explosionsdarstellung in Fig. 4.

Wie Fig. 3 erkennen lässt, gehört dem Federmotor 46 eine als Bandfeder ausgeführte Spiralfeder 48 mit einem äußeren Federende 49 und einem inneren Federende 51. Ferner gehört dem Federmotor 46 ein Federmotorgehäuse 52 mit einem zugehörigen Deckel 53. Das Gehäuse 52 ist becherartig gestaltet und weist eine zylindrische Gehäusewand 54 auf, die einen zylindrischen Innenraum 55 in Umfangsrichtung umgrenzt. An der Gehäusewand 54 ist ein nach innen ragender Fortsatz 56 vorgesehen, an dem das äußere Federende 59 mit einer Öffnung 57 formschlüssig verhakt ist. Die Wand 54 ist einstückig mit einer Seitenwand 58 versehen, die über die Außenumfangsfläche 59 der Wand 54 radial übersteht.

Der Deckel 53 weist denselben Durchmesser auf, wie die Wand 58 und sie kann über nicht weiter gezeigte Verankerungsmittel mit der Wand 54 verrastet oder verklinkt werden. Mittig durch die Wand 58 bzw. die Wand 53 läuft eine Lagerbohrung 61, 62 für eine Achse 63. Die Achse 63 setzt sich aus einem zylindrischen Abschnitt 64 und einem Gewindestück 65 zusammen. Der zylindrische Abschnitt 64 trägt eine radial vorstehende Nase 66, die dazu eingerichtet ist, mit einer Öffnung 67 am inneren Federende 51 verhakt zu werden. Nicht weiter gezeigte Sicherungs- oder Sprengringe sorgen für die Sicherung des Gehäuses 52 auf dem axialen Abschnitt 64 in axialer Richtung. Mit Hilfe des Gewindeabschnittes'65 kann die Achse 63 in nicht weiter gezeigter Weise auf einer Konsole in dem Türkorpus festgeschraubt werden.

Wie unschwer zu erkennen ist, bildet das Gehäuse 52 zusammen mit der aufgesetzten Scheibe 53 nach außen hin eine Bordscheibe mit einer zylindrischen Außenumfangsfläche, die durch die Außenumfangsfläche 59 gebildet ist, und Borden. An dieser Fläche ist ein als Textilband ausgeführtes Zugband 67 mit einem Ende befestigt. Das andere Ende des Bands 67 ist mit der Lasche 45, beispielsweise über einen Niet 68, verbunden.

Schließlich gehört zu dem Seitenfensterrollo 25 noch eine Getriebemotoranordnung 70, die über ein Ausgangszahnrad 71 ein Zahnrad 72 antreibt, das drehfest koaxial zu der Wickelwelle 31 angeordnet ist.

Die Funktionsweise des Seitenfensterrollos 25 ist wie folgt:

Im eingefahrenen Zustand ist die Rollobahn 29 soweit auf der Wickelwelle 31 aufgewickelt, bis die Zugstange 34 mit ihrer Oberseite oder Oberkante mit der Fensterunterkante 28 etwa bündig ist. In dieser Position hat der Tragstab 35 seine maximale Eintauchtiefe. Das bedeutet, dass das Zugband 67 maximal von dem Federmotor 46 abgewickelt ist.

Die selbsthemmende Wirkung des Getriebemotors 70 hindert den Federmotor 46 daran die Rollobahn 29 von der Wickelwelle 31 abzuziehen. Solange der Motor 70 abgeschaltet ist, bleibt das Seitenfensterrollo 25 in der gezeigten Position.

Wenn der Benutzer das Seitenfensterrollo 25 ausfahren will, setzt er den Getriebemotor 70 entsprechend in Gang. Hierdurch wird die Wickelwelle 31 im Sinne eines Abwickelns der Rollobahn 29 in Umdrehungen versetzt. In dem Maße, in dem Rollobahn 29 von der Wickelwelle 31 freigegeben wird, schieben der Federmotor 46 über den Tragstab 35 den Zugstab 34 nach oben. Diese Wirkung kommt zustande, weil der Federmotor 46 über das Zugband 67 bestrebt ist, das untere Ende des Tragstabs 35 in Richtung auf die Fensterunterkante 28 nach oben anzuheben bzw. zu verschieben.

Wenn die Rollobahn 29 vollständig ausgefahren ist, d.h. die Zugstange 34 an der Fensteroberkante angekommen ist, wird durch eine entsprechende Steuerung, die hier nicht Gegenstand der Erfindung ist, der Getriebemotor 70 stillgesetzt. Dadurch wird der Federmotor 46 gehindert, den Tragstab 35 weiter auszuschieben, weil die undehnbare Rollobahn 29 in Folge der gebremsten Wickelwelle 31 eine weitere Rollobahnbewegung 29 stoppt.

In der oberen Stellung ist das Zugband 67 auf das Federmotorgehäuse 52 des Federmotors 46 maximal aufgewickelt. In der obersten Stellung muss, damit die Spannung in dem Zugband 67 erhalten bleibt, das untere Ende des Tragstabs 35 ein entsprechendes Stück unterhalb des Federmotors 46 stehen bleiben.

Zum Einfahren des Seitenfensterrollos 25 wird der Getriebemotor 70 mit umgekehrter Drehrichtung in Gang gesetzt. Hierdurch wird die Wickelwelle 31 im Sinne eines Aufwickelns der Rollobahn 29 in Umdrehungen versetzt. Da die Rollobahn 29 undehnbar ist, werden hierüber die entsprechenden Kräfte auf den Zugstab 34 übertragen und von dort auf den Tragstab 35, der gezwungen wird entsprechend zunehmend tiefer in die Führungsschienen 40 einzutauchen. Bei der Abwärtsbewegung wird entsprechend das Zugband 67 von dem Federmotor 46 abgewickelt. Wie die Vorspannung innerhalb des Federmotors 46 zustande kommt, braucht an dieser Stelle nicht erläutert zu werden, es ist für den Fachmann selbstverständlich.

Die Verwendung eines Zugbandes hat den Vorteil, dass ein geordnetes Aufwickeln der Lagen übereinander stattfindet. Die Verwendung von Seilen ist ebenfalls möglich, birgt jedoch eine gewisse Gefahr, dass die Lagen übereinander zu liegen kommen und sich dabei im Laufe der Zeit beschädigen.

Die flachkantige Querschnittsgestalt des Tragstabs 35 in Verbindung mit der Führungsschiene 40 hat den Vorteil Verdrehungen des Tragstabs um die Längsachse zu verhindern. Auch bei Schwingungen um die Längsachse kehrt der Zugstab 34 in die Lage zurück, die ihm eindeutig durch den Tragstab 35 vorgegeben ist.

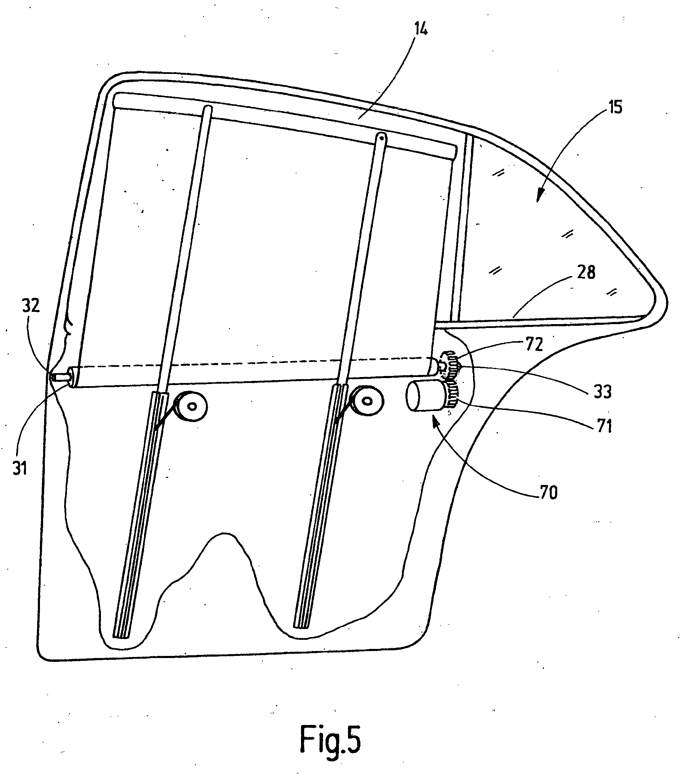

Fig. 5 zeigt eine andere Ausführungsform eines Seitenfensterrollos, bei dem gleiche Teile mit dem selben Bezugszeichen versehen sind; eine erneute Erläuterung ist entbehrleich.

Der wesentliche Unterschied zu Fig. 2 besteht in der Verwendung von zwei Tragstäben 35a und 35b. Jeder Tragstab 35a und 35b ist über ein eigenes Scharniergelenk 36a bzw. 36b mit dem Zugstab 34 verbunden. Die Gelenke sind wie oben beschreiben ausgeführt und längs des Zugatabs 34 voneinander beabstandet.

Die Wickelwelle 31 ist leicht konisch, wobei das dicke Ende neben der Vorderseite der Tür, in der Fig also links liegt. Die Rollobahn 29 weist einen entsprechenden Zuschnitt auf. Bei dieser Gestalt der Wickelwelle 31 bewegt sich der Zugstab 34 beim Ausfahren des Rollos längs einem Kreisbogen. Der Zugstab 34, der zunächst parallel zu der Fensterunterkante 28 liegt, vollführt bei seinem Weg zu der Fensteroberkante eine Schwenkbewegung um einen Punkt der rechts von der Fig. liegt. Am Ende der Ausfahrbewegung liegt der Zugstab 34 wie Fig. 5 erkennen lässt parallel zu der Fensteroberkante, die zu der Fensterunterkante 28 im Winkel verläuft, derart, dass die Höhe des Fensters zu Fahrzeugheck hin abnimmt.

Die Schwenkbewegung des Zugstabs 34 im Raum hat auch eine Schwenkbewegung des Zugstabs 34 gegenüber den Tragstäben 35a und 35b zur Folge. Mit Hilfe der Gelenke 36a und 36b ist es möglich diese Schwenkbewegung zu beherrschen, d.h. Zwänge zu vermeiden, die sonst zwischen den Tragstäben 35a und 35b einerseits und dem Zugstab 34 andererseits auftreten würden.

Um ein möglichst fehlerfreies Auf- und Abwickeln zu ermöglichen ist es lediglich notwendig die Führungsschienen 40a und 40b leicht schräg auszurichten. Die Längsachsen der geraden Tragstäbe 35a und 35b liegen so dass die Längsachse des jeweiligen Tragstabs 35a, 35b bei ausgefahrenem Rollo den Ort schneidet, an dem bei vollständig eingefahrenem Rollo die Scharnierachse des betreffenden Scharniergelenks 36a, 36b liegen würde.

Ein Fensterrollo weist eine Rollobahn auf, deren freies Ende mit einem Zugstab verbunden ist. Zum Führen des Zugstabs bein Ein- und Ausfahren des Rollos ist ein Tragstab vorgesehen, der über ein Scharniergelenk mit dem Zugstab verbunden ist.

## Patentansprüche

1. Seitenfensterrollo für Kraftfahrzeuge (1) mit einem Seitenfenster (14), das eine Fensterunterkante (28) und eine Fensteroberkante aufweist,
mit einer unterhalb der Fensterunterkante (28) drehbar gelagerten Wickelwelle (31),
mit einer Rollobahn (29), die einen dem Seitenfenster (14) entsprechenden Zuschnitt aufweist, die mit einer Kante an der Wickelwelle (31) befestigt ist und die eine von der Wickelwelle abliegende Kante aufweist,
mit einem Zugstab (34), der an der von der Wickelwelle (31) abliegenden Kante befestigt ist,
mit wenigstens einem Tragstab (35), der ein oberes Ende und der ein unteres Ende aufweist,
mit einem Gelenk (36), das den Zugstab (34) mit dem jeweiligen Tragstab (35) verbindet,
mit einer Führungseinrichtung (40) für den Tragstab (35), die unterhalb der Fensterunterkante (28) angeordnet ist um den Tragstab (35) im vorgegebenen Winkel zu der Fensterunterkante (28) vertikal zu führen, und
mit einer Antriebseinrichtung (46), die zumindest dazu eingerichtet ist die Wickelwelle (31) in Bewegung zu setzen, **dadurch gekennzeichnet, dass**
der jeweilige Tragstab (35) mittels einem zugeordneten linienförmigen Betätigunsglieds (67) zumindest in Ausschubrichtung bewegbar ist,
wobei dem Betätigunsglied (67) ein Federmotor (46) zugeordnet ist und
wobei der Wickelwelle (31) ein elektrischer Getriebemotor (70) zugeordnet ist.

2. Seitenfensterrollo nach Anspruch 1, **dadurch gekennzeichnet, dass** das Gelenk (36) ein Scharniergelenk ist, dessen Achse rechtwinkelig zu der Ebene des Fensters (14) ausgerichtet ist.

3. Seitenfensterrollo nach Anspruch 1, **dadurch gekennzeichnet, dass** zwei gleiche Tragstäbe (35) vorhanden sind, von denen jeder über ein Gelenk (36) mit dem Zugstab (34) verbunden ist und die parallel zueinander verlaufen.

4. Seitenfensterrollo nach Anspruch 1, **dadurch gekennzeichnet, dass** die Tragstäbe (35) eine unterschiedliche Länge aufweisen.

5. Seitenfensterrollo nach Anspruch 1, **dadurch gekennzeichnet, dass** die Wickelwelle (31) konisch ist.

6. Seitenfensterrollo nach Anspruch 1, **dadurch gekennzeichnet, dass** die Führungseinrichtung (40) für den Tragstab (35) von einer Führungsschiene gebildet ist, die eine Führungsnut (41) enthält, die sich mit konstantem Querschnitt über die Führungsschiene (40) fortsetzt.

7. Seitenfensterrollo nach Anspruch 1, **dadurch gekennzeichnet, dass** der Tragstab (35) mit einem Fortsatz (45) versehen ist, der durch die Führungsnut (41) nach außen vorsteht.

8. Seitenfensterrollo nach Anspruch 1, **dadurch gekennzeichnet, dass** der Tragstab (35) einen von der Kreisform abweichenden Querschnitt aufweist.

9. Seitenfensterrollo nach Anspruch 1, **dadurch gekennzeichnet, dass** der Federmotor (46) ein rotatorisch wirkender Federmotor ist.

10. Seitenfensterrollo nach Anspruch 1, **dadurch gekennzeichnet, dass** der Federmotor (46) als aktives Element eine Spiralfeder (48) in Gestalt einer Blattfeder aufweist.

11. Seitenfensterrollo nach Anspruch 1, **dadurch gekennzeichnet, dass** der Tragstab (35) zumindest angenähert rechtwinkelig zu der Fensterunterkante (28) geführt ist.

## Claims

1. Side window roller blind for motor vehicles (1) with a side window (14), which has a window lower edge (28) and a window upper edge,
with a winding shaft (31) rotatably mounted below the window lower edge (28),
with a blind sheet (29), which has a blank corresponding to the side window (14), is fastened to the winding shaft (31) at one edge and has an edge remote from the winding shaft,
with a pull rod (34), which is fastened to the edge remote from the winding shaft (31),
with at least one carrier rod (35), which has an upper end and a lower end, with a link (36), which connects the pull rod (34) to the respective carrier rod (35),
with a guide arrangement (40) for the carrier rod (35), which is arranged below the window lower edge (28) to vertically guide the carrier rod (35) at the predetermined angle to the window lower edge (28), and
with a drive arrangement (46), which is arranged at least to set the winding shaft (31) in motion, **characterised in that** the respective carrier rod (35) is movable at least in push-out direction by means of an associated linear operating member (67),
wherein the operating member (67) has an associated spring motor (46), and wherein the winding shaft (31) has an associated electric geared motor (70).

2. Side window roller blind according to claim 1, **characterised in that** the link (36) is a hinge link, the axis of which is oriented at right angles to the plane of the window (14).

3. Side window roller blind according to claim 1, **characterised in that** two identical carrier rods (35) are provided, each of which is connected to the pull rod (34) by means of a Link (36) and which run parallel to one another.

4. Side window roller blind according to claim 1, **characterised in that** the carrier rods (35) have different lengths.

5. Side window roller blind according to claim 1, **characterised in that** the winding shaft (31) is conical.

6. Side window roller blind according to claim 1, **characterised in that** the guide arrangement (40) for the carrier rod (35) is formed by a guide rail, which contains a guide groove (41), which extends with a constant cross-section over the guide rail (40).

7. Side window roller blind according to claim 1, **characterised in that** the carrier rod (35) is provided with an extension (42), which projects outwards through the guide groove (41).

8. Side window roller blind according to claim 1, **characterised in that** the carrier rod (35) has a cross-section differing from the circular form.

9. Side window roller blind according to claim 1, **characterised in that** the spring motor (46) is a rotationally active spring motor.

10. Side window roller blind according to claim 1, **characterised in that** the spring motor (46) has a spiral spring (48) in the form of a leaf spring as active element.

11. Side window roller blind according to claim 1, **characterised in that** the carrier rod (35) is guided at least approximately at right angles to the window lower edge (28).

## Revendications

1. Store à enrouleur pour fenêtre latérale, destiné à des véhicules automobiles (1) dotés d'une fenêtre latérale (14), qui présente un bord de fenêtre inférieur (28) et un bord de fenêtre supérieur,
comprenant un axe d'enroulement (31) monté avec possibilité de rotation sous le bord de fenêtre inférieur (28),
comprenant une bande de store (29) qui présente une coupe correspondant à la fenêtre latérale (14), qui est fixée par un bord à l'axe d'enroulement (31) et qui présente un bord éloigné de l'axe d'enroulement,
comprenant une barre de traction (34) qui est fixée au bord éloigné de l'axe d'enroulement (31),
comprenant au moins une barre de support (35) qui présente une extrémité supérieure et qui présente une extrémité inférieure,
comprenant une articulation (36) qui relie la barre de traction (34) à la barre de support (35) respective,
comprenant un dispositif de guidage (40) pour la barre de support (35), qui est placé sous le bord de fenêtre inférieur (28), afin de guider la barre de support (35) verticalement sous l'angle prédéterminé par rapport au bord de fenêtre inférieur (28), et
comprenant un dispositif d'entraînement (46) qui est conçu au moins pour mettre en mouvement l'axe d'enroulement (31), **caractérisé en ce que**
la barre de support (35) respective peut être déplacée au moins dans la direction de déploiement au moyen d'un organe d'actionnement (67) linéaire associé,
un moteur à ressort (46) étant associé à l'organe d'actionnement (67), et
un motoréducteur (70) électrique étant associé à l'axe d'enroulement (31).

2. Store à enrouleur pour fenêtre latérale selon la revendication 1, **caractérisé en ce que** l'articulation (36) est une articulation à charnière dont l'axe est orienté à angle droit par rapport au plan de la fenêtre (14).

3. Store à enrouleur pour fenêtre latérale selon la revendication 1, **caractérisé en ce que** deux barres de support (35) identiques sont prévues, qui sont chacune reliées à la barre de traction (34) par une articulation (36) et sont parallèles l'une à l'autre.

4. Store à enrouleur pour fenêtre latérale selon la revendication 1, **caractérisé en ce que** les barres de support (35) présentent des longueurs différentes.

5. Store à enrouleur pour fenêtre latérale selon la revendication 1, **caractérisé en ce que** l'axe d'enroulement (31) est conique.

6. Store à enrouleur pour fenêtre latérale selon la revendication 1, **caractérisé en ce que** le dispositif de guidage (40) pour la barre de support (35) est constitué d'une glissière qui contient une rainure de guidage (41), laquelle s'étend avec une section transversale constante dans la glissière (40).

7. Store à enrouleur pour fenêtre latérale selon la revendication 1, **caractérisé en ce que** la barre de support (35) est pourvue d'un bras (45) qui fait saillie vers l'extérieur en passant par la rainure de guidage (41).

8. Store à enrouleur pour fenêtre latérale selon la revendication 1, **caractérisé en ce que** la barre de support (35) présente une section transversale différente de la forme circulaire.

9. Store à enrouleur pour fenêtre latérale selon la revendication 1, **caractérisé en ce que** le moteur à ressort (46) est un moteur à ressort à action rotatoire.

10. Store à enrouleur pour fenêtre latérale selon la revendication 1, **caractérisé en ce que** le moteur à ressort (46) présente, en tant qu'élément actif, un ressort spiral (48) sous la forme d'une lame de ressort.

11. Store à enrouleur pour fenêtre latérale selon la revendication 1, **caractérisé en ce que** la barre de support (35) est guidée au moins approximativement à angle droit par rapport au bord de fenêtre inférieur (28).
